# EUROPÄISCHE PATENTSCHRIFT

(11) **EP 1 000 783 B1**
(45) Veröffentlichungstag und Bekanntmachung des Hinweises auf die Patenterteilung: **20.08.2003**
(21) Anmeldenummer: 99119853.2
(22) Anmeldetag: 07.10.1999
(51) Int. Cl.: B60H 1/00, H02K 5/22, F04D 25/08

(54) **Radialgebläse mit Anschluss-Steckverbindung**
Radial fan with plug-in connector
Ventilateur radial avec raccord de connexion

(30) Priorität: 09.11.1998 DE 29819962 U
(43) Veröffentlichungstag der Anmeldung: 17.05.2000
(73) Patentinhaber: ebm Werke GmbH & Co. KG, 74673 Mulfingen (DE)
(72) Erfinder: Streng, Gunter, Dipl-Ing.(FH), 74575 Schrozberg (DE); Bamberger, Bernhard, 97922 Lauda-Unterbalbach (DE); Müller, Rainer, 74629 Pfedelbach (DE)
(74) Vertreter: Patentanwälte Dr. Solf & Zapf

(56) Entgegenhaltungen:
- EP-A- 0 868 008
- DE-A- 4 425 364
- DE-U- 29 706 216
- US-A- 5 189 327

## Beschreibung

Die vorliegende Erfindung betrifft ein Radialgebläse mit einem Gehäuse zur Aufnahme einer Lüfterrad-Motor-Einheit, wobei das Gehäuse zwei Seitenteile und einen diese verbindenden Gehäusemantel aufweist, und mit einer Anschlußeinrichtung zum elektrischen Verbinden von Motorleitungen mit äußeren Anschlußleitungen.

Bei derartigen Radialgebläsen wird ein Elektromotor der inneren Lüfterrad-Motor-Einheit über Motorleitungen mit elektrischer Spannung versorgt, wobei die Motorleitungen ausgehend von dem Elektromotor bereichsweise durch eine zentrische Achse bis zu einem Trägerelement im zentrischen Bereich einer axialen LuftEinströmöffnung und von dort etwa radial entlang einer von mehreren speichenartigen Streben bis zu einer Anschlußeinrichtung geführt werden. Dabei ist es bekannt, ein Gehäuse der Anschlußeinrichtung außen an dem Gebläsegehäuse an einer vorbestimmten Stelle zu befestigen, insbesondere anzuschrauben. Die Verbindung der Motorleitungen mit äußeren Anschlußleitungen erfolgt bei bekannten Anschlußeinrichtungen zumeist über Schraubklemmen oder auch über Lötverbinder.

Ein Radialgebläse der eingangs beschriebenen gattungsgemäßen Art ist in der Druckschrift DE-U-297 06 216 beschrieben. Bei diesem Radialgebläse werden Motor-Anschlußleiter innerhalb einer Tragachse geführt. Weiterhin werden mechanische Steckverbindungen im Zusammenhang mit einer Motoraufhängung und einem Plastikelement zur Schwingungsisolierung beschrieben.

Aus einer anderen Druckschrift, nämlich der DE-A-44 25 364, ist ein Radialgebläse mit einem Gehäuse zur Aufnahme einer Lüfterrad-Motoreinheit bekannt, wobei das Gehäuse mit einer Anschlußeinrichtung zum elektrischen Verbinden der Motorleitung mit äußeren Anschlußleitungen versehen ist. Die Anschlußeinrichtung besteht aus einem mit den Motorleitungen verbundenen Verbinder zum Steckverbinden mit einem komplementären, mit den Anschlußleitungen verbundenen Verbinder. Der Verbinder ist direkt über eine Rastverbindung lösbar an einer Außenwand des Gehäuses befestig bar.

Der vorliegenden Erfindung liegt die Aufgabe zugrunde, bei einem Radialgebläse der genannten, gattungsgemäßen Art mit einfachen und wirtschaftlichen Mitteln die Herstellung bzw. Montage vor allem bezüglich der elektrischen Anschlußverbindungen zu vereinfachen sowie insbesondere auch die Einsatzmöglichkeiten variabler zu gestalten.

Erfindungsgemäß wird dies dadurch erreicht, daß die Anschlußeinrichtung aus einem mit den Motorleitungen verbundenen Steckverbinderteil zum Steckverbinden mit einem komplementären, mit den Anschlußleitungen verbundenen Verbinderteil sowie aus einem das Steckverbinderteil haltemden Montageteil besteht, wobei das Montageteil wahlweise an einer von mehreren unterschiedlichen Befestigungsstellen im Verbindungsbereich zwischen dem Gehäusemantel und einem der beiden Seitenteile über eine Rastverbindung lösbar an dem Gehäuse befestigbar ist.

Durch diese erfindungsgemäße Ausgestaltung vereinfacht sich zunächst die Montage des Radialgebläses selbst, indem das schon vorher mit den Motorleitungen verbundene, also vorkonfektionierte Steckverbinderteil nur noch über das Montageteil mit dem Gehäuse verrastet zu werden braucht. Dies kann durch einfaches Aufstecken sehr schnell und einfach erfolgen. Femer vereinfacht sich auch die weitere elektrische Anschlußverbindung, da die äußeren Anschlußleitungen einfach und schnell mit den Motorleitungen steckverbunden werden können. Darüber hinaus stellt die mittelbare Befestigung des Steckverbinderteils über das erfindungsgemäße Montageteil insofern einen besonderen Vorteil dar, als sich daraus die Möglichkeit ergibt, je nach Anwenderwunsch, Anwendungsfall bzw. Einsatzort verschiedene Steckverbinderteile an dem Gehäuse befestigen zu können; es brauchen dazu nur verschiedene Montageteile bereitgestellt zu werden, die auf der Verbindungsseite zum Gebläsegehäuse hin stets gleich ausgebildet, anderseitig aber speziell an das jeweilige Steckverbinderteil angepaßt sind. Das Montageteil erfüllt somit erfindungsgemäß eine Adapterfunktion, so daß es auch als Adapterteil bezeichnet werden kann. Erfindungsgemäß ist das Montageteil wahlweise an einer von mehreren unterschiedlichen Befestigungsstellen an dem Gebläsegehäuse befestigbar. Hierzu sind vorzugsweise an den verschiedenen Befestigungsstellen des Gebläsegehäuses jeweils gleichartige Haltemittel für das Montageteil vorgesehen. Durch diese Ausgestaltung ist es möglich, das Radialgebläse optimal für den jeweiligen Einsatzort auszulegen, indem das Steckverbinderteil bzw. das zu dessen Halterung vorgesehene Montageteil jeweils dort befestigt wird, wo am Einsatzort genügend Umgebungsraum vorhanden ist, so daß Kollisionen mit benachbarten Konstruktionsteilen sehr einfach vermieden werden können, ohne daß grundlegende konstruktive Änderungen des Radialgebläses oder gar eine Vielzahl von unterschiedlichen Typen erforderlich wären. Insofern ist bei einem eventuellen Wechsel des Einsatzortes sogar auch eine nachträgliche Anpassung an verschiedene Raumverhältnisse möglich.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll im folgenden die Erfindung näher erläutert werden. Dabei zeigen:
- Fig. 1: eine Perspektivansicht eines erfindungsgemäßen Radialgebläses in einem Zustand mit einem noch etwas geöffneten Seitenteil,
- Fig. 2: eine Perspektivansicht wie in Fig. 1 im fertig montierten Zustand, jedoch mit einer beispielhaften Alternativanordnung eines erfindungsgemäßen Steckverbinderteils,
- Fig. 3: eine vergrößerte Detailansicht der Anschlußeinrichtung nach der Erfindung (Pfeilrichtung III gemäß Fig. 1),
- Fig. 4: eine Darstellung eines Befestigungselementes aus einer gegenüberliegenden Blickrichtung (Pfeil IV in Fig. 3),
- Fig. 5: eine Detailansicht eines erfindungsgemäßen Montageteils und
- Fig. 6: eine Ansicht auf die Innenseite des Gehäuse-Seitenteils nach Fig. 1.

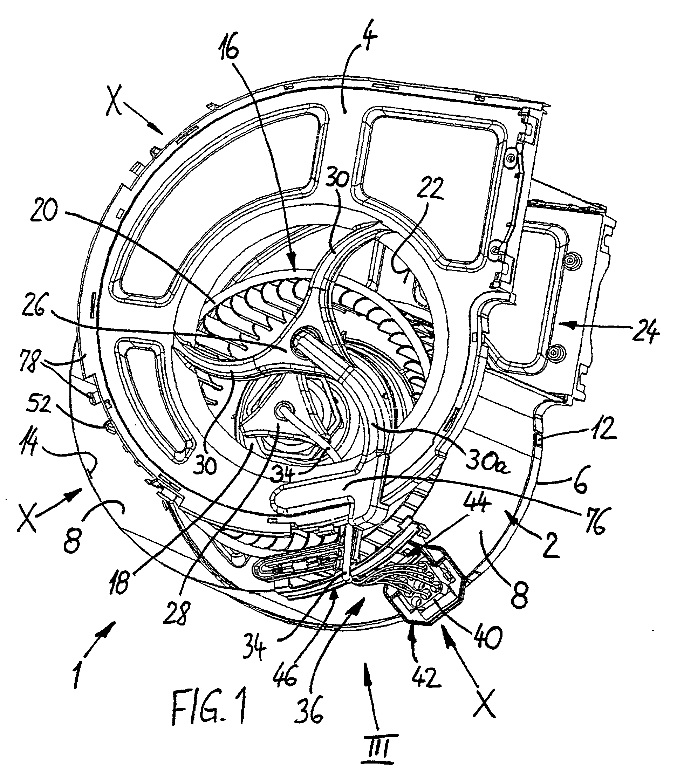

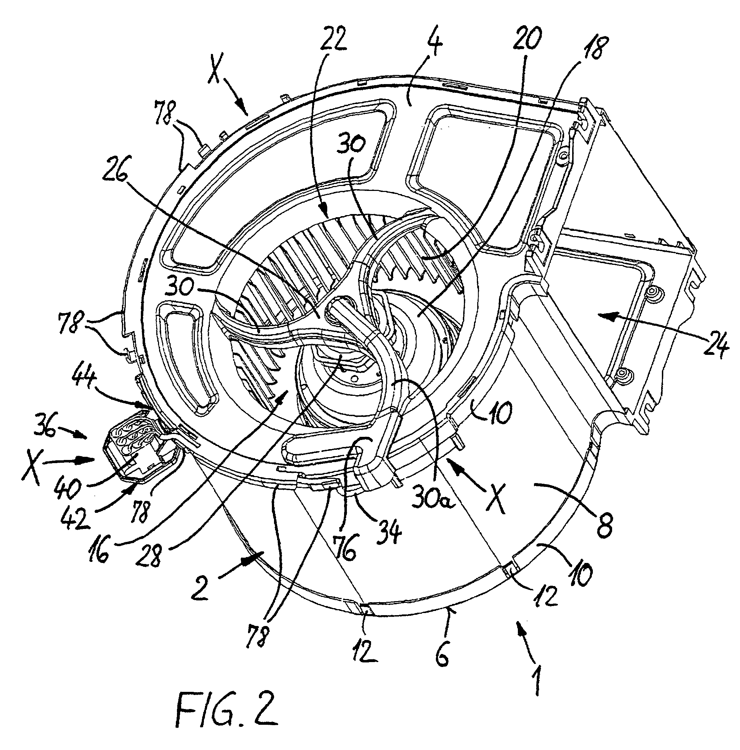

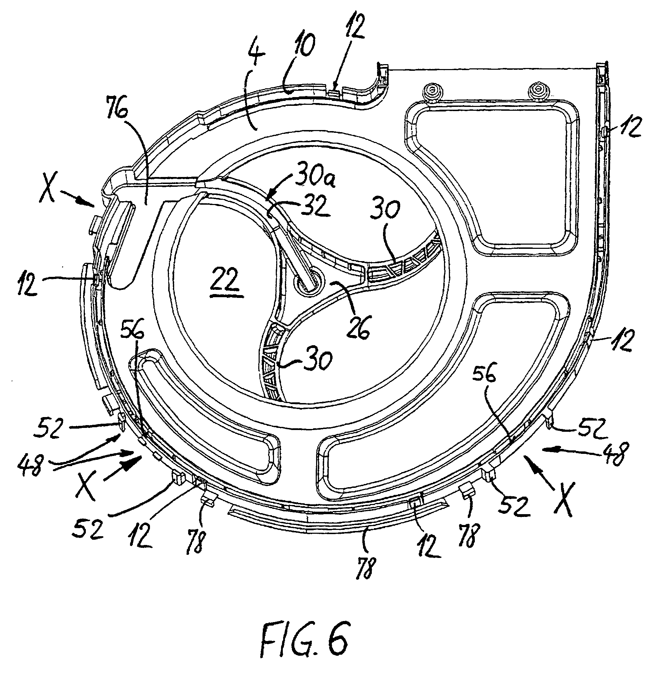

Wie sich zunächst aus den Fig. 1 und 2 jeweils ergibt,weist ein erfindungsgemäßes Radialgebläse 1 ein Spiral-Gehäuse 2 auf, das aus zwei axial gegenüberliegenden, stirnseitigen Seitenteilen 4, 6 und einem diese verbindenden, entsprechend der Spiralform des Gehäuses 2 in Umfangsrichtung gekrümmt verlaufenden Gehäusemantel 8 besteht. Im bevorzugten Ausführungsbeispiel besteht der Gehäusemantel 8 aus Metallblech, während die Seitenteile 4, 6 als Kunststoff-Formteile ausgeführt sind. Dabei weist jedes Seitenteil 4, 6 einen den Rand des Gehäusemantels 8 übergreifenden Steg 10 auf und wird über Rasthaken 12 (s. hierzu Fig. 6), die in korrespondierende Öffnungen 14 (vgl. Fig. 1) des Gehäusemantels 8 eingreifen, fixiert. Innerhalb des Gehäuses 2 ist eine Lüfterrad-/Motor-Einheit 16 untergebracht, wobei ein Elektromotor 18, üblicherweise ein Außenläufermotor, ein Radiallaufrad 20 trägt. Dabei kann das Radialgebläse 1 in einseitig oder doppelseitig saugender Ausführung ausgebildet sein, wobei zumindest eines der beiden Seitenteile, wie dargestellt zumindest das Seitenteil 4, eine axiale Einströmöffnung 22 aufweist. Das Gehäuse 2 besitzt aufgrund seiner Spiralform eine radiale bzw. mehr tangentiale Ausströmöffnung 24.

Der Elektromotor 18 ist innerhalb des Gehäuses 2 über eine nicht bezeichnete Achse abgestützt, wobei jedes Ende der Achse in einem zentrischen Trägerelement 26 des jeweiligen Seitenteils 4 bzw. 6 gehalten ist, und zwar vorzugsweise über elastische Schwingungsisolationsmittel 28, wie sie in dem DE-GM 297 06 216 der Anmelderin beschrieben sind, worauf an dieser Stelle in vollem Umfang Bezug genommen wird. Das jeweilige Trägerelement 26 ist über im wesentlichen radial und vorzugsweise gekrümmt verlaufende Streben 30 mit dem übrigen, die Einströmöffnung 22 umschließenden Bereich des Seitenteils 4 bzw. 6 verbunden. Dabei ist zumindest eine der Streben, vgl. in Fig. 6 die Strebe 30a, zur Bildung eines Leitungskanals 32 mit einem U-förmigen, in Richtung des Elektromotors 18 hin offenen Querschnitt ausgebildet. Der Leitungskanal 32 dient zur Aufnahme von Motorleitungen 34 (s. Fig. 1), die ausgehend von dem Elektromotor 18 über den Bereich des Trägerelementes 26 und durch den Leitungskanal 32 der Strebe 30a zu einer am Gehäuse 2 angeordneten Anschlußeinrichtung 36 geführt sind.

Hierbei ist nun erfindungsgemäß vorgesehen, daß die Anschlußeinrichtung 36 aus einem bereits mit den Motorleitungen 34 verbundenen (vorkonfektionierten) Steckverbinderteil 40 sowie aus einem das Steckverbinderteil 40 haltemden Montageteil 42 besteht. Dabei ist das Montageteil 42 erfindungsgemäß über eine Rastverbindung 44 lösbar an dem Gehäuse 2 befestigbar. Mit dem Steckverbinderteil 40 kann ein nicht dargestelltes, komplementäres, mit äußeren Anschlußleitungen verbundenes Verbinderteil steckverbunden werden. Hierzu weist das Steckverbinderteil 40 mehrere einzelne Steckverbinderelemente (Steckerstifte und/oder Buchsen) auf.

Das Montageteil 42 ist erfindungsgemäß wahlweise an jeweils einer von mehreren unterschiedlichen Befestigungsstellen X an dem Gehäuse 2 befestigbar. Bei dem dargestellten Ausführungsbeispiel ist eine Befestigung an drei verschiedenen Befestigungsstellen X möglich. Es wird hierzu auf die Figuren 1, 2 und 6 verwiesen.

Das Montageteil 42 ist jeweils im Verbindungsbereich zwischen dem Gehäusemantel 6 und dem Seitenteil 4 befestigbar, also im stimseitigen Randbereich des Gehäusemantels 8. Je nach Befestigungsstelle X erfolgt die Befestigung des Montageteils 42 entweder mittelbar über ein zusätzliches Befestigungselement 46 oder unmittelbar an dem Seitenteil 4.

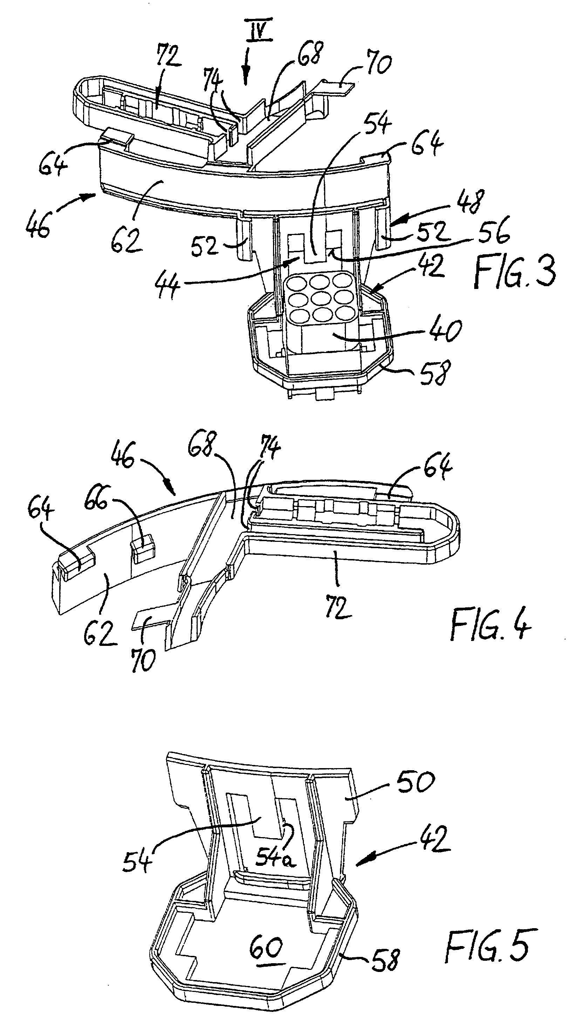

Wie sich aus den Detailansichten gemäß Fig. 3 bis 5 ergibt, sind zur Halterung des Montageteils 42 Haltemittel 48 insbesondere in Form einer Einschubaufnahme zum Einschieben eines Halteabschnittes 50 des Montageteils 42 nach Art einer Nut/Feder-Verbindung vorgesehen. Gemäß Fig. 3 wird die Einschubaufnahme durch zwei seitliche Stege 52 gebildet, zwischen die der Halteabschnitt 50 insbesondere in axialer Richtung einschiebbar ist. Dabei weist das Montageteil 42 mindestens einen elastischen Rastarm 54 auf, der mit einer Rastnase 54a (Fig. 5) eine Haltekante 56 derart untergreift, daß das Montageteil 42 hierdurch gegen Herausziehen aus der Einschubaufnahme lösbar arretiert ist. Je nach Befestigungsstelle X sind die Haltemittel 48 und die Haltekante 56 an dem zusätzlichen Befestigungselement 46 oder unmittelbar an dem Seitenteil 4, und zwar an dessen Steg 10, gebildet.

Wie sich weiterhin vor allem aus Fig. 3 und 5 ergibt, weist das Montageteil 42 einen Trägerabschnitt 58 für das Steckverbinderteil 40 auf, wobei sich dieser Trägerabschnitt 58 ausgehend von dem etwa axial ausgerichteten, wandungsartigen Halteabschnitt 50 vorzugsweise in einer etwa senkrecht zur Drehachse des Lüfters liegenden Ebene etwa radial von dem Gehäuse 2 weg nach außen erstreckt. Dabei weist der Trägerabschnitt 58 eine an das Steckverbinderteil 40 angepaßte Halteaufnahme 60 auf. Vorzugsweise wird das Steckverbinderteil 40 über nicht dargestellte Rastmittel in der Halteaufnahme 60 lösbar fixiert. Die Halteaufnahme 60 ist an das jeweilige Steckverbinderteil 40 angepaßt. Dies bedeutet, daß durch unterschiedliche Ausgestaltung der Halteaufnahme 60 nahezu beliebige Steckverbinderteile 40 vorgesehen sein können.

Das gesondert in der Fig. 3 und 4 dargestellte Befestigungselement 46 wird bevorzugt an dem Gehäuse 2 befestigt, indem es zunächst auf den Rand des Gehäusemantels 8 aufgesetzt und dann durch das aufgesetzte Seitenteil 4 fixiert wird. Hierbei weist das Befestigungselement 46 einen an die Krümmung des Gehäusemantels 8 angepaßten Haltesteg 62 auf, wobei an diesem Haltesteg 62 einerseits Hakenelemente 64 zum Übergreifen des Gehäusemantels 8 sowie bevorzugt andererseits mindestens ein weiteres Hakenelement 66 zum Eingreifen in eine vom Außenrand beabstandete Öffnung (nicht dargestellt) des Gehäusemantels 8 angeordnet sind (insbesondere Fig. 4). Zweckmäßigerweise schließt sich an den - radial außenseitig die Haltemittel 48 für das Montageteil 42 aufweisenden - Haltesteg 62 ein etwa radial nach innen weisender Kanalabschnitt 68 an, der zur führenden Aufnahme der Motorleitungen 34 dient. Der Kanalabschnitt 68 ist bevorzugt mit mindestens einer umklappbaren Verschlußlasche 70 ausgestattet, mit der die Motorleitungen 34 in dem Kanalabschnitt 68 fixiert werden können. Dabei weist der Kanalabschnitt 68 einen U-förmigen, axial nach außen, d.h. vom Elektromotor 18 weg, offenen Querschnitt auf. In weiterer vorteilhafter Weiterbildung der Erfindung zweigt von dem Kanalabschnitt 68 ein gehäuseartiges Aufnahmeteil 72 ab, welches inbesondere zur Aufnahme eines nicht dargestellten elektrischen Sicherungselementes dient. Im Abzweigungsbereich zwischen dem Kanalabschnitt 68 und dem Aufnahmeteil 72 sind entsprechende, schlitzartige Leitungsdurchführöffnungen 74 gebildet. Soll das Radialgebläse 1 mit einem Sicherungselement ausgestattet werden, so wird ein vom Elektromotor 18 kommender Anschlußdraht zunächst teilweise durch den Kanalabschnitt 68 geführt und dann durch die Leitungsdurchführöffnung 74 bis zur Sicherung. Am anderen Ende der Sicherung wird ein Draht dann über die zweite Leitungsdurchführöffnung 74 zurück in den Kanalabschnitt 68 und zusammen mit den übrigen Motorleitungen zum Steckverbinderteil 40 geführt.

Das Befestigungselement 46 ist ferner derart an einer Stelle relativ zu dem Seitenteil 4 montierbar, daß sein Kanalabschnitt 68 in Verlaufsrichtung der Motorleitungen 34 direkt in den Leitungskanal 32 der Strebe 30a des Seitenteils 4 übergeht.

Zweckmäßigerweise besitzt das Seitenteil 4 hierbei ein integriertes Deckelelement 76 zum Abdecken des Befestigungselementes 46 und dabei zum Verschließen des Kanalabschnittes 68 und des Aufnahmeteils 72.

Schließlich ist es vorteilhaft, wenn das Seitenteil 4 im Umfangsbereich zwischen der Position des Befestigungselementes 46 und jeder weiteren Befestigungsstelle X für das Montageteil 42 bzw. das Steckverbinderteil 40 Leitungsfixierelemente 78 aufweist, mit denen die vom Steckverbinderteil 40 zum Elektromotor 18 führenden Motorleitungen 34 in ihrem Bereich zwischen dem Steckverbinderelement 40 und dem Befestigungselement 46 fixiert und insbesondere auch wenigstens bereichsweise nach außen abgedeckt werden können.

Es soll nun noch kurz die Montage des erfindungsgemäßen Radialgebläses 1 zur Verdeutlichung der durch die Erfindung erreichten Vorteile erläutert werden. Zunächst wird an dem Gehäusemantel 8 das eine (in der Zeichnung untere) Seitenteil 6 befestigt. Nun wird die Lüfterrad/Motor-Einheit 16 eingefügt. Das Befestigungselement 46 wird auf den freien Rand des Gehäusemantels 8 aufgesetzt. Nach dem Aufsetzen des anderen, oberen Seitenteils 4 wird es dann in seiner Position fixiert. Die Motorleitungen 34 verlaufen hierbei durch den Leitungekanal 32 der Strebe 30a sowie durch den Kanalabschnitt 68. Das Steckverbinderteil 40 wird über das Montageteil 42 hauptsächlich, d.h. im Regelfall, an dem Befestigungselement 46 befestigt. Besteht allerdings der Wunsch, das Steckverbinderteil 40 beispielsweise wegen Platzproblemen am Einsatzort an anderer Stelle am Radialgebläse 1 anzuordnen, so sind hierzu beispielsweise noch zwei weitere Befestigungsstellen X vorgesehen. Hierzu sind die Motorleitungen 34 mit entsprechender Länge ausgeführt. Zur Befestigung des Steckverbinderteils 40 wird das Montageteil 42 an der gewünschten Stelle X direkt an dem Seitenteil 4 befestigt. Die Motorleitungen 34 sind dann in die Leitungsfixierelemente 78 einlegbar und so fixierbar. Das integrierte Dekelelement 76 des Seitenteils 4 umgreift mit Rändem geringfügig das Sicherungs-Aufnahmeteil 72, wodurch vorteithafterweise eine räumliche Trennung von Luftführungsteil im Inneren des Radialgebläses 1 und Sicherungs-Aufnahmeteil 72 erfolgt. Es ist von besonderem Vorteil, daß die Motorleitungen 34 an keiner Stelle durch Öffnungen gefädelt werden müssen. Vielmehr erfolgt die Montage allein durch Auf- bzw. Zusammenstecken der einzelnen Baugruppen.

## Patentansprüche

1. Radialgebläse (1) mit einem Gehäuse (2) zur Aufnahme einer Lüfterrad-Motor-Einheit (16), wobei das Gehäuse (2) zwei Seitenteile (4, 6) und einen diese verbindenden Gehäusemantel (8) aufweist, und mit einer Anschlusseinrichtung (36) zum elektrischen Verbinden von Motorleitungen (34) mit äusseren Anschlussleitungen,
**dadurch gekennzeichnet, dass**
die Anschlusseinrichtung (36) aus einem mit den Motorleitungen (34) verbundenen Steckverbinderteil (40) zum Steckverbinden mit einem komplementären, mit den Anschlussleitungen verbundenen Verbinderteil sowie aus einem das Steckverbinderteil (40) halternden Montageteil (42) besteht, wobei das Montageteil (42) wahlweise an einer von mehreren unterschiedlichen Befestigungsstellen (X) im Verbindungsbereich zwischen dem Gehäusemantel (8) und einem der beiden Seitenteile (4) über eine Rastverbindung (44) lösbar an dem Gehäuse (2) befestigbar ist.

2. Radialgebläse nach Anspruch 1,
**dadurch gekennzeichnet, daß** das Montageteil (42) einerseits mittelbar über ein zusätzliches Befestigungselement (46) und/oder andererseits unmittelbar an dem Seitenteil (4) oder an dem Gehäusemantel (8) befestigbar ist.

3. Radialgebläse nach Anspruch 2,
**dadurch gekennzeichnet, daß** das Seitenteil (4) und/oder das zusätzliche Befestigungselement (46) an der jeweiligen Befestigungsstelle (X) Haltemittel (48) insbesondere in Form einer Einschubaufnahme zum Einschieben eines Halteabschnittes (50) des Montageteils (42) aufweisen/aufweist.

4. Radialgebläse nach Anspruch 3,
**dadurch gekennzeichnet, daß** die Haltemittel (48) derart ausgebildet sind, daß das Montageteil (42) insbesondere parallel zur Lüfter-Drehachse einschiebbar ist, wobei das Montageteil (42) mindestens einen elastischen Rastarm (54) aufweist, der mit einer Rastnase (54a) eine Haltekante (56) des Seitenteils (4) bzw. des Befestigungselementes (46) derart untergreift, daß das Montageteil (42) gegen Herausziehen aus der Einschubaufnahme lösbar arretiert ist.

5. Radialgebläse nach Anspruch 3 oder 4,
**dadurch gekennzeichnet, daß** das Montageteil (42) einen Trägerabschnitt (58) für das Steckverbinderteil (40) aufweist, wobei sich der Trägerabschnitt (58) ausgehend von dem Halteabschnitt (50) vorzugsweise in einer etwa senkrecht zur Drehachse liegenden Ebene etwa radial von dem Gehäuse (2) weg erstreckt.

6. Radialgebläse nach Anspruch 5,
**dadurch gekennzeichnet, daß** der Trägerabschnitt (58) eine an das Steckverbinderteil (40) angepaßte Halteaufnahme (60) aulweist, und daß das Steckverbinderteil (40) über Rastmittel in der Halteaufnahme (60) fixiert wird.

7. Radialgebläse nach einem der Ansprüche 2 bis 6,
**dadurch gekennzeichnet, daß** das zusätzliche Befestigungselement (46) auf den Rand des Gehäusemantels (8) aufsetzbar ist und durch das dann aufgesetzte Seitenteil (4) fixiert wird.

8. Radialgebläse nach einem der Ansprüche 2 bis 7,
**dadurch gekennzeichnet, daß** das Befestigungselement (46) einen an die Krümmung des Gehäusemantels (8) angepaßten Haltesteg (62) aufweist, wobei an dem Haltesteg (62) einerseits Hakenelemente (64) zum Übergreifen des Gehäusemantels (8) und vorzugsweise andererseits mindestens ein Hakeneiement (66) zum Eingreifen in eine vom Außenrand beabstandete Öffnung des Gehäusemantels (8) angeordnet sind.

9. Radialgebläse nach Anspruch 8,
**dadurch gekennzeichnet, daß** sich an den - radial außenseitig die Haltemittel (48) für das Montageteil (42) aufweisenden - Haltesteg (62) ein etwa radial nach innen weisender Kanalabschnitt (68) zur führenden Aufnahme der Motorleitungen (34) anschließt.

10. Radialgebläse nach Anspruch 9,
**dadurch gekennzeichnet, daß** von dem Kanalabschnitt (68) ein gehäuseartiges Aufnahmeteil (72) - insbesondere für ein elektrisches Sicherungselement - mit entsprechenden Leitungsdurchführöffnungen (74) abzweigt.

11. Radialgebläse nach einem der Ansprüche 1 bis 10,
**dadurch gekennzeichnet, daß** das Gehäuse-Seitenteil (4,6) eine axiale Einströmöffnung (22) und in diesem Bereich ein zentrisches Motor-Trägerelement (26) aufweist, das über im wesentlichen radial und vorzugsweise gekrümmt verlaufende Streben (30) mit dem übrigen, die Einströmöffnung (22) umschließenden Bereich des Seitenteils (4,6) verbunden ist, wobei zumindest eine (30a) der Streben (30) zur Bildung eines Leitungskanals (32) mit einem U-förmigen, zur Motorseite hin offenen Querschnitt ausgebildet ist.

12. Radialgebläse nach Anspruch 11 und nach Anspruch 9 oder 10,
**dadurch gekennzeichnet, daß** das Befestigungselement (46) derart an einer der Befestigungsstellen relativ zu dem Seitenteil (4) montierbar ist, daß sein Kanalabschnitt (68) in Verlaufsrichtung der Motorleitungen (34) in den Leitungskanal (32) des Seitenteils (4) übergeht.

13. Radialgebläse nach einem der Ansprüche 9 bis 12,
**dadurch gekennzeichnet, daß** das Seitenteil (4) ein integriertes Deckelelement (76) zum Abdecken des Befestigungselementes (46) und zum Verschließen des Kanalabschnittes (68) und/oder des Aufnahmeteils (72) aufweist.

14. Radialgebläse nach einem der Ansprüche 2 bis 13,
**dadurch gekennzeichnet, daß** das Seitenteil (4) im Umfangsbereich zwischen der Befestigungsstelle des Befestigungselementes (46) und der/ jeder weiteren Befestigungsstelle (X) für das Montageteil (42) Leitungsfixierelemente (78) für die von dem Steckverbinderteil (40) zum Motor führenden Motorleitungen (34) aufweist.

## Claims

1. Centrifugal blower (1) having a housing (2) to receive an impeller/motor unit, the housing having two side members (4, 6) and a circumferential shell (8) connecting these latter, and having a connecting means (36) for the electrical connection of motor leads (34) to external connecting leads,
**characterised in that** the connecting means (36) comprises a plug-and-socket connector part (40) connected to the motor leads (34), for plug-and-socket connection to a complementary connector part connected to the connecting leads, and an attaching part (42) which acts as a mounting for the plug-and-socket connector part (40), the attaching part (42) being releasably fastenable to the housing (2) at one, as desired, of a plurality of different fastening points (X) in the region of the joint between the circumferential housing shell (8) and one (4) of the two side members by means of a latching connection (44).

2. Centrifugal blower according to claim 1, **characterised in that** the attaching part (42) can be fastened to the side member (4) or to the circumferential housing shell (8) on the one hand indirectly via an additional fastening member (46) and/or on the other hand directly.

3. Centrifugal blower according to claim 2, **characterised in that** the side-member (4) and/or the additional fastening member (46) have/has at the given fastening point (X) retaining means (48) in the form of, in particular, an insertion receptacle for the insertion of a retaining portion (50) of the attaching part (42).

4. Centrifugal blower according to claim 3, **characterised in that** the retaining means (48) are so formed that the attaching part (42) can be inserted, in particular, parallel to the axis of rotation of the impeller, the attaching part (42) having at least one resilient latching arm (54) which, by means of a latching nose (54a), fits under a retaining edge (56) on the side member (4) in such a way that the attaching part (42) is releasably locked against being withdrawn from the insertion receptacle.

5. Centrifugal blower according to claim 3 or 4, **characterised in that** the attaching part (42) has a carrier portion (58) for the plug-and-socket connector part (40), this carrier portion (58) extending away from the housing (2), starting from the retaining portion (50), approximately radially, preferably in a plane lying approximately perpendicular to the axis of rotation.

6. Centrifugal blower according to claim 5, **characterised in that** the carrier portion (58) has a retaining receptacle (60) which is matched to the plug-and-socket connector part (40) and **in that** the plug-and-socket connector part (40) is fixed in the retaining receptacle (60) by latching means.

7. Centrifugal blower according to one of claims 2 to 6, **characterised in that** the additional fastening member 46 can be mounted on the edge of the circumferential housing shell (8) and is fixed in place by the side member (4) which is then fitted over it.

8. Centrifugal blower according to one of claims 2 to 7, **characterised in that** the fastening member (46) has a mounting lip (62) which is matched to the curvature of the circumferential housing shell (8), there being arranged on the mounting lip (62) on the one hand hook members (64) to fit over the circumferential housing shell (8) and on the other hand, preferably, at least one further hook member (66) to engage in an opening in the circumferential housing shell (8) which is spaced away from the outside edge.

9. Centrifugal blower according to claim 8, **characterised in that** connecting up with the mounting lip (62) - which has the retaining means (48) for the attaching part (42) on the outside radially - is a channelled portion (68) which points approximately radially inwards, to receive and guide the motor leads (34).

10. Centrifugal blower according to claim 9, **characterised in that** there branches off from the channelled portion (68) a housing-like receptacle section (72) - particularly for an electrical fuse link - having appropriate openings (74) for leads to pass through.

11. Centrifugal blower according to one of claims 1 to 10, **characterised in that** the housing side member (4, 6) has an axial inlet opening (22) and, in this region, a central motor carrier member (26) which is connected to the rest of that region of the side member (4, 6) which surrounds the inlet opening (22) via struts (30) which extend substantially radially and preferably in a curve, at least one (30a) of the struts (30) being arranged to form a lead channel (32) having a U-shaped cross-section which is open on the motor side.

12. Centrifugal blower according to claim 11 and according to claim 9 or 10,
**characterised in that**, at one of the fastening points, the fastening member (46) can be mounted in a position relative to the side member (4) such that its channelled portion (68) mates, in the direction in which the motor leads (34) extend, with the lead channel (32) in the side member (4).

13. Centrifugal blower according to one of claims 9 to 12, **characterised in that** the side member (4) has an integrated cover member (76) to cover the fastening member (46) and to close off the channelled portion (68) and/or the receptacle section (72).

14. Centrifugal blower according to one of claims 2 to 13, **characterised in that** the side member (4) has, in the circumferential region, between the fastening point of the fastening member (46) and the/any further fastening point (X) for the attaching part (42), lead fixing members (78) for the motor leads (34) running from the plug-and-socket connector part (40) to the electric motor (18).

## Revendications

1. Soufflante radiale (1) avec une carcasse (2) destinée à loger une unité moteur-rotor (16), la carcasse (2) présentant deux parties latérales (4, 6) et une enveloppe de carcasse (8) reliant celles-ci et avec un dispositif de raccordement (36) pour relier électriquement des conducteurs de moteur (34) à des conducteurs de raccordement extérieurs, **caractérisé en ce que** le dispositif de raccordement (36) comprend une pièce de connecteur à fiches (40) reliée aux conducteurs du moteur (34) destinée à être connectée à une pièce de connecteur complémentaire reliée aux conducteurs de raccordement, ainsi qu'une pièce de montage (42) supportant la pièce de connecteur à fiches (40), la pièce de montage (42) pouvant être fixée de manière séparable sur la carcasse (2) au choix en l'un de plusieurs endroits de fixation différents (X) dans la zone de jonction entre l'enveloppe de la carcasse (8) et l'une des deux parties latérales (4) par l'intermédiaire d'un assemblage par encliquetage (44).

2. Soufflante radiale selon la revendication 1, **caractérisée en ce que** la pièce de montage (42) peut être fixée sur la partie latérale (4) ou sur l'enveloppe de la carcasse (8) directement, d'une part, et/ou indirectement par l'intermédiaire d'un élément de fixation supplémentaire (46), d'autre part.

3. Soufflante radiale selon la revendication 2, **caractérisée en ce que** la partie latérale (4) et/ou l'élément de fixation supplémentaire (46) présente(nt) à l'endroit de fixation correspondant (X) des moyens de retenue (48), en particulier sous la forme d'un logement d'insertion destiné à y insérer un segment de fixation (50) de la pièce de montage (42).

4. Soufflante radiale selon la revendication 3, **caractérisée en ce que** les moyens de retenue (48) sont formés de manière à ce que la pièce de montage (42) puisse être embrochée en particulier parallèlement à l'axe de rotation de la soufflante, la pièce de montage (42) présentant au moins un bras de blocage (54) élastique qui s'engage avec un bec de blocage (54a) sous une arête de retenue (56) de la partie latérale (4) ou de l'élément de fixation (46), de manière à ce que la pièce de montage (42) soit bloquée de manière séparable contre sa sortie du logement d'insertion.

5. Soufflante radiale selon la revendication 3 ou 4, **caractérisée en ce que** la pièce de montage (42) présente un segment de support (58) pour la pièce de connecteur à fiches (40), ledit segment de support (58) s'étendant à partir du segment de retenue (50) de préférence dans un plan situé à peu près perpendiculairement à l'axe de rotation à peu près dans le sens radial à partir de la carcasse (2).

6. Soufflante radiale selon la revendication 5, **caractérisée en ce que** le segment de support (58) présente un logement de retenue (60) adapté à la pièce de connecteur à fiches (40) et que la pièce de connecteur à fiches (40) est fixée dans le logement de retenue (60) par l'intermédiaire de moyens de blocage (60).

7. Soufflante radiale selon l'une des revendications 2 à 6, **caractérisée en ce que** l'élément de fixation supplémentaire (46) peut être posé sur le bord de l'enveloppe de carcasse (8) et est fixé par la partie latérale (4) posée ensuite.

8. Soufflante radiale selon l'une des revendications 2 à 7, **caractérisée en ce que** l'élément de fixation (46) présente une barrette de maintien (62) adaptée à la courbure de l'enveloppe de carcasse (8), des éléments à crochet (64) destinés à saisir l'enveloppe de carcasse (8) par le dessus d'une part et de préférence au moins un élément à crochet (66) destiné à s'insérer dans une ouverture de l'enveloppe de carcasse (8) distante du bord extérieur d'autre part, étant disposés sur la barrette de maintien (62).

9. Soufflante radiale selon la revendication 8, **caractérisée en ce qu'**un segment de conduit (68) regardant vers l'intérieur dans le sens radial, destiné à loger en les guidant les conducteurs de moteur (34), est contigu à la barrette de maintien (62) qui présente, du côté extérieur dans le sens radial, les moyens de retenue (48) pour la pièce de montage (42).

10. Soufflante radiale selon la revendication 9, **caractérisée en ce qu'**une partie logement en forme de boîtier (72) dérive du segment de conduit (68), en particulier pour un élément de sécurité électrique, avec des ouvertures de traversée de conducteurs correspondantes.

11. Soufflante radiale selon l'une des revendications 1 à 10, **caractérisée en ce que** la partie latérale de carcasse (4, 6) présente une ouverture d'admission axiale (22) et dans cette zone un élément de support de moteur centré (26), qui est relié, par l'intermédiaire d'entretoises (30) s'étendant essentiellement dans le sens radial et de préférence cintrées, avec l'autre zone de la partie latérale (4, 6) entourant l'ouverture d'admission (22), au moins l'une (30a) des entretoises (30) ayant une section en forme de U ouverte du côté moteur pour former un conduit de conducteurs (32).

12. Soufflante radiale selon la revendication 11 et la revendication 9 ou 10, **caractérisée en ce que** l'élément de fixation (46) peut être monté en l'un des endroits de fixation relativement à la partie latérale (4), de telle sorte que son segment de conduit (68) passe dans le sens du tracé des conducteurs de moteur (34) dans le conduit de conducteur (32) de la partie latérale (4).

13. Soufflante radiale selon l'une des revendications 9 à 12, **caractérisée en ce que** la partie latérale (4) présente un élément de recouvrement intégré (76) pour recouvrir l'élément de fixation (46) et pour fermer le segment de conduit (68) et/ou la partie logement (72).

14. Soufflante radiale selon l'une des revendications 2 à 13, **caractérisée en ce que** la partie latérale (4) présente, dans la zone périphérique entre l'endroit de fixation de l'élément de fixation (46) et le/chaque autre endroit de fixation (X) pour la pièce de montage (42), des éléments de fixation de conducteurs (78) pour les conducteurs de moteur (34) allant de la pièce de connecteur à fiches (40) au moteur.
